# EUROPÄISCHE PATENTSCHRIFT

(11) **EP 3 107 677 B1**
(45) Veröffentlichungstag und Bekanntmachung des Hinweises auf die Patenterteilung: **04.04.2018**
(21) Anmeldenummer: 15714409.8
(22) Anmeldetag: 17.02.2015
(51) Int. Cl.: B23K 9/067, B23K 9/167, B23K 9/173, B23K 9/29

(54) **VERFAHREN UND VORRICHTUNG ZUM METALL-SCHUTZGAS-SCHWEISSEN UNTER VERWENDUNG EINER NICHT ABSCHMELZENDEN DRAHTELEKETRODE UND EINER ABSCHMELZENDEN ELEKTRODE**
METHOD OF AND DEVICE FOR GAS-SHIELDED METAL-ARC WELDING USING A NON-CONSUMABLE WIRE ELECTRODE AND A CONSUMABLE ELECTRODE
PROCÉDÉ ET DISPOSITIF DE SOUDAGE SOUS PROTECTION GAZEUSE AU MOYEN D'UN FIL-ÉLECTRODE NON FUSIBLE ET D'UNE ÉLECTRODE FUSIBLE

(30) Priorität: 21.02.2014 DE 102014002213
(43) Veröffentlichungstag der Anmeldung: 28.12.2016
(73) Patentinhaber: MHIW B.V., 8253 RC Dronten (NL)
(72) Erfinder: BÜSCHER, Konstantin Alexander, 46399 Bocholt (DE); WIJNHOLDS, Ralph, NL-8252 JW Dronten (NL)
(74) Vertreter: Cohausz Hannig Borkowski Wißgott
(86) Internationale Anmeldenummer: PCT/EP2015/000342
(87) Internationale Veröffentlichungsnummer: WO 2015/124286

(56) Entgegenhaltungen:
- GB-A- 772 132
- JP-A- 2001 239 368
- JP-A- 2003 181 647
- US-A- 3 549 857

## Beschreibung

Die Erfindung betrifft ein Verfahren zum Metall-Schutzgas-Schweißen, und einen Brennerkopf zum Metall-Schutzgas-Schweißen gemäß dem Oberbegriff der Ansprüche 1 und 9 (siehe, z.B., US3 549 857). Das Metall-Schutzgas-Schweißen, kurz auch als MSG-Schweißen bezeichnet, ist im Stand der Technik bekannt und weist die Vorteile auf, dass das abschmelzende Metall einer beim Schweißen zum Werkstück, insbesondere kontinuierlich zugeführten Drahtelektrode sowie auch das aufschmelzende Metall von wenigstens einem zu schweißenden Werkstück während des Schweißvorganges durch ein Schutzgas vor der oxidierenden Umgebungsatmosphäre geschützt ist.

Dabei ist es weiterhin bekannt, dass als Schutzgas beispielsweise inerte Gase, wie Argon oder Helium zum Einsatz kommen können, wobei das Schweißverfahren sodann als MIG-Schweißen bezeichnet wird oder aber auch, dass als Schutzgas ein aktives beziehungsweise reaktives Schutzgas, wie beispielsweise Kohlendioxid oder eine Mischung aus Kohlendioxid und Argon verwendet wird, was sodann als MAG-Schweißen bezeichnet wird. Die Auswahl der jeweiligen Schutzgasart erfolgt dabei im Wesentlichen in Abhängigkeit des zu schweißenden Materials des wenigstens einen Werkstückes.

Zum Einsatz kommen bei diesen Schweißverfahren üblicherweise Brennereinheiten, die eine Drahtzuführung für die abzuschmelzende Drahtelektrode aufweisen, wobei hierbei die abzuschmelzende Drahtelektrode durch eine Stromkontaktdüse geführt wird, um die Schweißströme über die Drahtelektrode zu leiten. Die Stromkontaktdüse ihrerseits ist in einer Schutzgasdüse angeordnet, die üblicherweise hülsenförmig ausgebildet ist, wobei durch diese Schutzgasdüse das jeweils ausgewählte Schutzgas an der Stromkontaktdüse und der Drahtelektrode vorbei zur Schweißstelle geführt wird, so dass die örtliche Umgebung des erzeugten Lichtbogens beim Schweißen in einer Schutzgasschicht liegt.

Das Metall-Schutzgas-Schweißen dieser bekannten Art kann sowohl mit einer manuellen Führung einer Brennereinheit sowie auch einer automatisierten Führung einer Brennereinheit durchgeführt werden, wobei üblicherweise durch die Bewegung der Brennereinheit entlang eines Schweißweges eine dem Schweißweg folgende Schweißnaht erzeugt wird.

Im Stand der Technik ist es dabei bekannt, dass beim Metall-Schutzgas-Schweißen besonders der Schweißnahtanfang, der auch zeitlich dem Beginn des Schweißvorganges entspricht, häufig einen nicht ausreichenden Einbrand aufweist und demnach eine ungenügende Verbindung darstellt zwischen dem wenigstens einen zu schweißenden Werkstück und dem von der Drahtelektrode zugeführten Metallmaterial beziehungsweise auch unter zwei miteinander zu verbindenden Werkstücken.

Um dieses Problem zu verringern, ist es besonders dann, wenn eine Brennereinheit auf einem in sich geschlossenen Schweißweg geführt wird, wie es zum Beispiel beim Stumpfschweißen von Rohrenden der Fall ist, versucht worden, durch einen Überlapp zwischen Schweißnahtanfang und Schweißnahtende das Problem mangelnden Einbrandes am Schweißnahtanfang zu verringern. Untersuchungen des Schweißnahtanfanges, zum Beispiel durch Schnitt- und Schliffproben, haben jedoch gezeigt, dass auch ein solches überlappendes Schweißen die Problematik des mangelnden Einbrandes bei einem MSG, insbesondere MAG-Schweißen nicht vollständig löst.

Im Stand der Technik ist es auch weiterhin bekannt geworden, eine Schweißnaht, die durch ein MSG-Schweißverfahren, also unter Inert-Gas oder auch Aktiv-Gas hergestellt wurde, nochmals aufzuschmelzen, ohne einen Schweißzusatz hinzuzufügen, nämlich beispielsweise dadurch, dass die Schweißnaht mit einem gezündeten Lichtbogen, der zwischen dem wenigstens einen zu schweißenden Werkstück und einer nicht abschmelzenden Elektrode brennt, zu überfahren.

Ein solches Schweißverfahren, dass mit nicht abschmelzender Elektrode durchgeführt wird, ist beispielsweise das sogenannte WIG-Schweißverfahren, bei welchem eine Wolfram-Elektrode in einer Schutzgasschicht aus Inert-Gas nach Zünden des Lichtbogens über die zuvor im MSG-Verfahren hergestellte Schweißnaht geführt wird. Dies soll ein nochmaliges Aufschmelzen der bereits zuvor hergestellten MSG-, insbesondere MAG-Schweißnaht bewirken und hierdurch den Einbrand verbessern und die Schweißnaht egalisieren. Solche Verfahren erweisen sich jedoch aufgrund des zweifachen Einsatzes verschiedener Schweißverfahren als aufwendig und kostenintensiv.

Aus dem Dokument EP 1 583 359 ist weiterhin ein Brennerkopf zum Metall-Schutzgas-Schweißen bekannt geworden, der eine erste Brennereinheit zur Zuführung einer abschmelzenden Drahtelektrode und eine zweite Brennereinheit mit einer nicht abschmelzenden ortsfesten Elektrode umfasst, wobei beide Brennereinheiten miteinander mechanisch verbunden sind, die Elektroden in einer gemeinsamen, mit Schutzgas beaufschlagbaren Schutzgasdüse angeordnet sind und sich die Längserstreckungsrichtungen der Elektroden schneiden, insbesondere in einem spitzen Winkel schneiden.

Gemäß diesem Dokument wird ein solcher kombinierter Brennerkopf eingesetzt, um eine Schweißnaht unter gleichzeitiger Durchführung von MSG- und WIG-Schweißvorgängen herzustellen, wobei dieses Dokument beschreibt, dass WIG-Schweißverfahren dem MSG-Verfahren voreilen zu lassen, dass also während des gesamten Schweißvorganges zur Herstellung einer Schweißnaht zunächst das wenigstens eine Werkstück durch den zwischen dem wenigstens einem Werkstück und der nicht abschmelzenden Elektrode brennenden Lichtbogen aufgeschmolzen wird und sodann im nachfolgenden MSG-Schweißverfahren Material aus einer abschmelzenden Drahtelektrode der Schweißnaht zugeführt wird. Auch ein solches Verfahren unter Einsatz dieses bekannten kombinierten Brennerkopfes ist kostenintensiv und technisch aufwendig, da kontinuierlich während der Durchführung einer Schweißnaht entlang eines Schweißweges beide Brennereinheiten des kombinierten Brennerkopfes in Betrieb sind und sich hierbei die beiden gleichzeitig existierenden Lichtbögen gegenseitig beeinflussen können, so dass hier besondere Maßnahmen technischer Art zur gegenseitigen Abschirmung der Lichtbögen getroffen werden müssen.

Aufgabe der Erfindung ist es ein Metall-Schutzgas-Schweißverfahren der eingangs genannten gattungsgemäßen Art sowie auch einen Brennerkopf mit Brennereinheiten sowohl für die Zuführung einer abschmelzenden Drahtelektrode als auch zum Halten einer nicht abschmelzenden Elektrode insoweit zu verbessern, als dass die Problematik mangelnden Einbrandes am Beginn einer im MSG-Verfahren, insbesondere MAG-Verfahren herzustellenden Schweißnaht überwunden wird. Ein Verfahren und ein Brenner zum Metall-Schutzgas-Schweißen gemäß der Erfindung sind in den Ansprüchen 1 und 9 definiert. Der wesentliche Kerngedanke dieses erfindungsgemäßen Verfahrens beruht darauf, lediglich am Ort des Anfangs einer insgesamt herzustellenden Schweißnaht, die entlang eines Schweißweges, insbesondere auch eines in sich geschlossenen Schweißweges erzeugt wird, dem durchzuführenden Metall-Schutzgas-Schweißverfahren zunächst ein lokales Vorwärmen des wenigstens einen Werkstückes zeitlich vor dem Zünden des Lichtbogens zwischen dem wenigstens einen Werkstück und der abschmelzenden Drahtelektrode zu erzeugen, so dass sodann das danach einsetzende Metall-Schutzgas-Schweißverfahren in einem bereits vorgewärmten Bereich des wenigstens einen Werkstückes, insbesondere von zwei miteinander zu verbindenden Werkstücken einsetzt.

Dabei erfolgt gegenüber dem vorbeschriebenen Stand der Technik bevorzugter Weise zu keinem Zeitpunkt eine kombinierte Überlagerung von zwei verschiedenen Schweißverfahren, insbesondere keine zeitlich überlagerte Existenz zweier Lichtbögen, wie im Stand der Technik von MSG- und WIG-Schweißverfahren, sondern zu jeder Zeit erfolgt lediglich das Durchführen eines dieser Schweißverfahren wobei das zeitlich vorgelagerte Schweißen mit einer nicht abschmelzenden Elektrode unter Schutzgasatmosphäre lokal auf den Schweißnahtanfang beschränkt bleibt.

Zur Durchführung dieses Verfahrens sieht die Erfindung weiterhin vor, einen Brennerkopf einzusetzen, in welchem gleichzeitig eine erste Brennereinheit zur Zuführung einer abschmelzenden Drahtelektrode und eine zweite Brennereinheit mit einer nicht abschmelzenden Elektrode vorgesehen ist, wobei die erfindungsgemäße konstruktive Weiterbildung vorsieht, dass die Brennereinheit der nicht abschmelzenden Elektrode einen Antrieb umfasst, mit dem die nicht abschmelzende, insbesondere stab- oder nadelförmige Elektrode in ihrer Längserstreckungsrichtung verschiebbar ist.

So besteht hier nicht nur die Möglichkeit, die beiden Brennereinheiten mit den unterschiedlichen Elektrodeneinheiten zeitlich nacheinander zu betreiben, sondern auch weiterhin die nicht abschmelzende Elektrode zur Durchführung eines zeitlich nachfolgenden MSG-Schweißverfahrens entlang der zu erstellenden Schweißnaht aus dem lokalen Einflussbereich des Lichtbogens zwischen der abschmelzenden Drahtelektrode und der Schweißnaht vollständig zu entfernen, da mit der erfindungsgemäßen Vorrichtung die nicht abschmelzende Elektrode mittels des Antriebes sowohl in Richtung des Werkstückes vorgeschoben als auch vom Werkstück in die Brennereinheit zurückgezogen werden kann, insbesondere so, dass diese vollständig außerhalb des Einflussbereiches des anschließend entstehenden Lichtbogens der anderen Brennereinheit angeordnet ist.

Bevorzugt ist es hier in einer Weiterbildung vorgesehen, dass die nicht abschmelzende Elektrode, wie beispielsweise eine Wolfram-Elektrode mit bevorzugt angespitztem unteren Ende, mit dem genannten Antrieb zwischen zwei Stopp-Positionen hin und her bewegbar ist, wofür in der Brennereinheit entsprechende Anschläge vorgesehen sein können zwischen denen die nicht abschmelzende Elektrode bewegbar ist.

Hierbei kann es die Erfindung insbesondere vorsehen, dass in einer der Stopp-Positionen, nämlich der unteren Stopp-Position, bei welcher ein Lichtbogen an der nicht abschmelzenden Elektrode gezündet wird, im Schnittpunkt der Längserstreckungsrichtungen beider Elektroden, also sowohl der abschmelzenden Drahtelektrode als auch der nicht abschmelzenden Elektrode liegt. Hierdurch wird sichergestellt, dass die nicht abschmelzende Elektrode am Anfang der Schweißnaht exakt an die örtliche Position des wenigstens einen zu schweißenden Werkstückes angestellt wird, an der zeitlich nachfolgend sodann das Metall-Schutzgas-Schweißverfahren unter Anwendung der abschmelzenden Drahtelektrode beginnt.

Ein Zünden des Lichtbogens an der nicht abschmelzenden Elektrode kann dabei durch Hochspannungspulse unter bestehendem Abstand zwischen der Elektrodenspitze und dem wenigstens einen Werkstück erfolgen oder auch durch Kontaktieren des wenigstens einen Werkstückes und anschließenden Zurückziehen der Elektrode. Das Zurückziehen kann hier durch Bewegen des gesamten Brennerkopfes oder auch nur Bewegen der Elektrode z.B. mit dem genannten Antrieb erfolgen.

Nach erfolgtem Vorwärmen wird sodann vor dem Starten des Lichtbogens an der abschmelzenden Drahtelektrode zunächst die nicht abschmelzende Elektrode mittels des benannten Antriebes vom Werkstück zurückgezogen, insbesondere wobei bereits alleine durch das Zurückziehen ein Erlöschen des Lichtbogens bewirkt werden kann, oder aber auch unter gleichzeitigem oder vorherigem Abschalten der Stromversorgung. Somit zündet der Lichtbogen an der abschmelzenden Drahtelektrode immer erst nach Erlöschen des Lichtbogens an der nicht abschmelzenden Elektrode.

Der erfindungsgemäße Brennerkopf kann es hierbei weiterhin vorsehen, dass die Brennereinheit der nicht abschmelzenden Elektrode eine in der gemeinsamen Schutzgasdüse angeordnete verschließbare, insbesondere mit einer verschwenkbaren Klappe verschließbaren Mündungsöffnung aufweist, durch welche hindurch die Spitze der nicht abschmelzenden Elektrode hindurchgeführt ist bei einer Bewegung zwischen den Stopp-Positionen.

So kann es die Erfindung beispielsweise hier vorsehen, dass bei einer Bewegung in die zum Schweißen benötigte untere Position die nicht abschmelzende Elektrode durch die Mündungsöffnung hindurchfährt und hierbei die verschwenkbare Klappe aus ihrer geschlossenen Position in eine geöffnete Position verschiebt. Wird hingegen die nicht abschmelzende Elektrode durch den Antrieb zurückgezogen, so kann es die Erfindung vorsehen, zum Beispiel durch eine Federbelastung der Klappe, dass diese automatisch die Mündungsöffnung wieder verschließt, sobald die Spitze mit der nicht abschmelzenden Elektrode die Mündungsöffnung in Rückzugrichtung durchfahren hat.

So kann hierdurch sichergestellt werden, dass ein automatisches Verschließen der Mündungsöffnung in der zurückgezogenen Position der nicht abschmelzenden Elektrode gegeben ist und somit diese Elektrode vollständig außerhalb des Einflussbereichs des Lichtbogens bei der Durchführung des MSG-Schweißens liegt, somit also beispielsweise auch nicht durch verspritzende Schweißperlen verunreinigt werden kann.

Der hier benannte Antrieb zur Bewegung der nicht abschmelzenden Elektrode kann grundsätzlich auf jede mögliche Art und Weise ausgebildet sein, zum Beispiel elektromotorisch, hydraulisch oder pneumatisch, wobei unter pneumatisch nicht zwingend der Einsatz von Druckluft, sondern allgemein von Druckgas, insbesondere unter Verwendung von wenigstens einem bei den Schweißvorgängen eingesetzten Schutzgas verstanden werden kann. Ein solcher Antrieb ist bevorzugt jeweils als Linearantrieb ausgebildet, der eine Verschiebung in linearer Richtung längs der Erstreckungsrichtung der nicht abschmelzenden Elektrode bewirkt.

Eine besonders bevorzugte Ausführungsform des erfindungsgemäßen Brennerkopfes kann es vorsehen, dass der Antrieb als ein Zylinder-Kolben-Aggregat ausgebildet ist, das in weiterhin bevorzugter Ausführung mit einem gasförmigen Fluid betrieben wird, wie beispielsweise mit einem inerten Schutzgas, insbesondere einem solchen inerten Schutzgas wie Argon oder Helium, das auch für die Durchführung des lokalen Vorwärmens am Anfang der Schweißnaht oder auch zusätzlich für die Durchführung des weiteren Schweißens mit abschmelzender Drahtelektrode eingesetzt werden kann.

Bei Einsatz eines solchen Zylinder-Kolben-Aggregates kann es die Erfindung vorsehen, dass die nicht abschmelzende Elektrode in einem verschieblichen Kolbenelement dieses Zylinder-Kolbenaggregates angeordnet ist, zum Beispiel koaxial in diesem. Hier kann eine klemmende insbesondere form- und oder kraftschlüssige Befestigung zwischen Elektrode und Kolbenelement vorgesehen sein.

So kann durch Druckbeaufschlagung des Kolbenelementes durch das gasförmige Fluid, wie beispielsweise einem inerten Gas, eine Bewegung des Kolbenelementes und somit eine Bewegung der nicht abschmelzenden Elektrode erzeugt werden.

Dabei kann es die Erfindung grundsätzlich vorsehen, dass das Kolbenelement dieses Zylinder-Kolben-Aggregates beispielsweise an zwei aneinander gegenüberliegenden Kolbenflächen jeweils mit unter Druck stehendem, gasförmigem Fluid umschaltbar beaufschlagbar ist, so dass sich die Bewegungsrichtung des Kolbenelementes in Abhängigkeit davon ergibt, welche der einander gegenüberliegenden Kolbenflächen aktuelle durch Druck beaufschlagt wird. Ein Vorschieben oder Zurückziehen der nicht abschmelzenden Elektrode kann sodann durch ein bloßes Umschalten der Druckbeaufschlagung erfolgen.

Eine alternative Ausführung kann es hier auch vorsehen, dass das Kolbenelement lediglich an einer Kolbenfläche mit unter Druck stehendem Fluid schaltbar beaufschlagbar ist, wofür diese Kolbenfläche in einem druckbeaufschlagbaren Kolbenraum des Zylinders liegt, und bei dieser Druckbeaufschlagung entgegen einer rückstellenden Federkraft verschoben wird. Wird sodann die Druckbeaufschlagung abgeschaltet und der Kolbenraum zum Beispiel durch Ventilbetätigung druckentlastet, zum Beispiel zur äußeren Umgebung hin, so wird das Kolbenelement und damit die nicht abschmelzende Elektrode durch die Federkraft, die zum Beispiel durch eine Druckfeder ausgeübt werden kann, zurückgestellt und hierbei insbesondere eine Bewegung der nicht abschmelzenden Elektrode vom Werkstück weg in die Brennereinheit hinein bewirkt.

Bei den vorgenannten Ausführungen kann es besonders bevorzugt vorgesehen sein, dass das genannte Zylinder-Kolben-Aggregat zum Antrieb des Kolbenelementes ab- oder umschaltbar mit einer Inertgasquelle, wie beispielsweise einer Argon- oder Helium-Druckgasquelle verbunden ist, mit welcher gleichzeitig auch die gemeinsame Schutzgasehülse mit Inertgas versorgt oder zumindest versorgbar ist.

Hierdurch wird sichergestellt, dass das gesamte Brennerkopf-System selbst bei eventuellen konstruktiv vorgesehenen oder gegebenenfalls auch im Fehlerfall nicht beabsichtigten Undichtigkeiten immer nur unter Inertgas-Einfluss steht und somit keine oxidierende Beschädigung der nicht abschmelzenden Elektrode entstehen kann.

Besonders bevorzugt wird dadurch auch erzielt, dass durch dieselbe Druckgasquelle auch die Schutzgasspülung mit Inertgas zum Vorwärmen des Schweißnahtanfanges gemäß dem erfindungsgemäßen Verfahren vor Beginn des MSG-Schweißens erfolgt.

Eine erfindungsgemäße Weiterbildung des Verfahrens kann es vorsehen, dass vor dem Zünden des Lichtbogens zwischen dem wenigstens einen Werkstück und der nicht abschmelzenden Elektrode die Drahtelektrode vom Werkstück zurückgezogen und sodann erst nach diesem Zurückziehen das Vorschieben der nicht abschmelzenden Elektrode aus der Brennereinheit in Richtung zu dem wenigstens einen Werkstück erfolgt, deren Lichtbogen zum lokalen Vorwärmen am Anfang des Schweißweges zeitweise, beispielsweise für weniger als 10 Sekunden gezündet wird und nach Erlöschen dieses Lichtbogens und insbesondere erst nach einem Zurückziehen der nicht abschmelzenden Elektrode wieder die abschmelzende Drahtelektrode an das wenigstens eine Werkstück herangeführt wird.

Hier kann es vorgesehen sein, dass beim Zurückziehen der abschmelzenden Drahtelektrode dieses Zurückziehen bis in das Innere der Stromkontaktdüse erfolgt wodurch bewirkt werden kann, dass auch das untere Drahtende der abschmelzenden Drahtelektrode während der Durchführung des Vorwärmens mit der nicht abschmelzenden Elektrode außerhalb von deren Lichtbogen und damit verbundenen Einflüssen liegt.

Eine erfindungsgemäße Weiterbildung kann hier vorsehen, dass nach dem lokalen Vorwärmen am Anfang des Schweißweges mit einer im Brennerkopf, bevorzugt in der Brennereinheit der abschmelzenden Drahtelektrode vorgesehenen Messvorrichtung eine Bestimmung der Drahtspitzenposition erfolgt, um hieraus eine Information zu gewinnen, wie weit die abschmelzende Drahtelektrode für den Beginn des MSG-Schweißens vorgeschoben werden muss.

Auch ohne eine solche Messvorrichtung kann erfindungsgemäß ein gezieltes Vorschieben erfolgen, welches beispielsweise in der Vorschubgeschwindigkeit reduziert wird bis zur normalen Zuführgeschwindigkeit während des MSG-Schweißens in Abhängigkeit des gemessenen Stromes, der mit Zünden des Lichtbogens sprunghaft ansteigt.

Das erfindungsgemäße Verfahren kann weiterhin in einer bevorzugten Ausbildung vorsehen, dass das Zünden des Lichtbogens zwischen dem wenigstens einen Werkstück und der abschmelzenden Drahtelektrode in einem Zeitintervall erfolgt, in welchem ein vorgewärmter Bereich des wenigstens einen Werkstückes am Ort des Schweißnahtanfanges nach dem Wegziehen der nicht abschmelzenden Elektrode vorliegt.

Hier kann es vorgesehen sein, dieses Zeitintervall zwischen Erlöschen des Lichtbogens an der nicht abschmelzenden Elektrode und dem Zünden des Lichtbogens an der schmelzenden Drahtelektrode im Bereich von 1/100 bis 200/100 Sekunden zu wählen. Das Zeitintervall kann in einer bevorzugten Ausbildung so gewählt werden, dass die lokale Temperatur des Werkstücks am Nahtanfang 400 Grad Celsius nicht unterschreitet.

Erfindungsgemäß ist somit bevorzugt weiterhin sicherzustellen, dass mit dem eingangs beschriebenen Antrieb ein entsprechend schnelles Zurückziehen der nicht abschmelzenden Elektrode aus der Schweißposition in die Brennereinheit zurück erfolgen kann, insbesondere so, dass die gesamte Bewegung zwischen den beiden Stopp-Positionen, insbesondere während des Zurückziehens, eine kürzere Zeit in Anspruch nimmt, als das vorgenannte maximale Zeitintervall zwischen dem Erlöschen und dem Zünden der beiden vorgenannten Lichtbögen an den beiden verschiedenen Elektroden.

Es wird so sichergestellt, dass ein Wiedererkalten der durch die nicht abschmelzende Elektrode und den dadurch erzeugten Lichtbogen erzeugten Werkstückvorwärmung mit Sicherheit vermieden wird und somit das MSG-Schweißverfahren immer dann einsetzt, wenn noch mit Sicherheit ein vorgewärmter Bereich am Anfang der zu erzeugenden Naht existiert.

Die Erfindung sieht bevorzugt weiterhin vor, dass während des gesamten erfindungsgemäßen Verfahrensschrittes, bei welchem ein lokales Vorwärmen am Schweißnahtanfang unter Einsatz eines Lichtbogens an der nicht abschmelzenden Elektrode erzeugt wird, der erfindungsgemäße Brennerkopf sich in einer Ruheposition relativ zu dem wenigstens einen Werkstück befindet, demnach also eine Fahrbewegung einer die abschmelzende Drahtelektrode zuführenden Brennereinheit beziehungsweise unter Verwendung des erfindungsgemäßen Brennerkopfes eine Fahrbewegung dieses gesamten Brennerkopfes erst nach Erlöschen des Lichtbogens zwischen der nicht abschmelzenden Elektrode und dem wenigstens einen Werkstück und nach Starten des Lichtbogens zwischen der abschmelzenden Drahtelektrode und dem wenigstens einen Werkstück beginnt. Insbesondere kann es hier vorgesehen sein, vor dem Beginn der Fahrtbewegung eine Verweilzeit vorzusehen, in welcher der Schweißnahtanfang mittels Zuführung der abschmelzenden Drahtelektrode geschweißt wird.

Das erfindungsgemäße Verfahren kann grundsätzlich bei jeder Art von Schweißwegen eingesetzt werden, wobei eine bevorzugte Ausführung es vorsehen kann, das erfindungsgemäße Verfahren, insbesondere unter Einsatz des erfindungsgemäßen Brennerkopfes bei in sich geschlossenen Schweißwegen zum Einsatz zu bringen, da hierbei eine Rationalisierung der Schweißung und qualitative Optimierung nicht nur durch Verbesserung des Einbrandes am Schweißnahtanfang erfolgen kann, sondern bei Einsatz des erfindungsgemäßen Verfahrens auch ein überlappendes Schweißen zwischen Schweißnahtende und Schweißnahtanfang entfallen kann.

Das erfindungsgemäße Schweißverfahren, insbesondere unter Einsatz des erfindungsgemäßen Brennerkopfes kann somit beispielsweise bevorzugt zum Stumpfschweißen von Rohrenden sowohl innenseitig als auch außenseitig verwendet werden, wobei es vorgesehen sein kann, innenseitig mit dem erfindungsgemäßen Verfahren eine Schweißnaht zu ziehen und außenseitig mehrere, übereinanderliegende Schweißnähte vorzusehen, wobei wenigstens eine, insbesondere die unterste, bevorzugt jedoch alle Schweißnahtlagen nach dem erfindungsgemäßen Verfahren durchgeführt werden können.

Besonders bei diesem Stumpfschweißen entlang eines Rohrumfangs, sowohl innenseitig als auch außenseitig, kann es vorgesehen sein, die jeweiligen Rohrenden innen- und außenseitig vor dem Aneinanderstoßen mit Fasen zu versehen, wobei die innere Fase kleiner ausgebildet sein kann als die äußere Fase, so dass eine ringförmige Kontaktzone der aneinanderstoßenden Rohrstümpfe beziehungsweise Stirnseiten über die Mitte der Rohrwanddicke radial nach innen verlagert ist. So kann die kleinere Innenfase der aneinanderstoßenden Rohrenden die Nachkontaktierung eine V-Nut ausbilden, die mit einer einzigen Schweißnahtlage verschlossen werden kann, wobei die sich ausbildende, tiefere, äußere gebildete V-Nut mit mehreren, insbesondere wenigstens zwei Schweißnahtlagen geschlossen wird.

Durch eine bevorzugte Weiterbildung des Brennerkopfes, gemäß welcher dieser einen ersten Gasanschluss, insbesondere zur Zuführung eines inerten Gases, und einen zweiten Gasanschluss, insbesondere zur Zuführung eines aktiven Gases umfasst, sowie eine steuerbare Ventilvorrichtung aufweist, mittels der alternativ der erste oder der zweite Gasanschluss an die Schutzgasdüse anschaltbar ist, kann es im durchgeführten erfindungsgemäßen Verfahren bevorzugt vorgesehen sein, dass während der Dauer des Lichtbogens zwischen der nicht abschmelzenden Elektrode und dem wenigstens einen Werkstück ein Spülen des Schweißnahtanfanges durch die Schutzgasdüse mit inertem Schutzgas, wie beispielsweise Argon oder Helium, erfolgt und während der Dauer des Lichtbogens zwischen der abschmelzenden Drahtelektrode und dem wenigstens einen Werkstück ein Spülen mit aktivem Schutzgas, insbesondere Kohlendioxid oder einer Mischung aus Kohlendioxid und Argon erfolgt, insbesondere wobei die Gaszufuhr in die gemeinsame Schutzgasdüse nach dem Erlöschen des Lichtbogens zwischen der nicht abschmelzenden Elektrode und dem wenigstens einen Werkstück umgeschaltet wird von inertem auf aktives Schutzgas.

So kann das Schweißen entlang des Schweißweges als MAG-Schweißverfahren durchgeführt werden, obwohl das lokale Vorwärmen am Schweißnahtanfang unter Inertgas-Einfluss, zum Beispiel als WIG-Schweißverfahren, gehandhabt wurde.

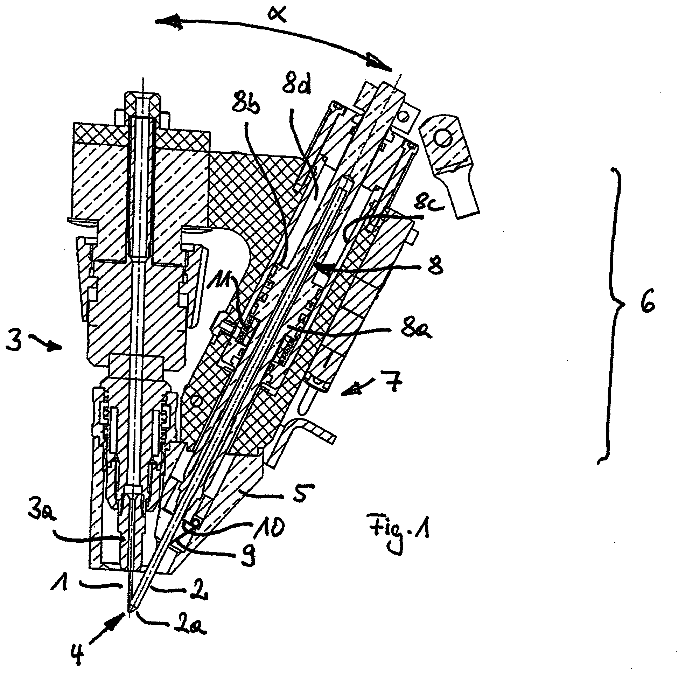

Ein erfindungsgemäßer Brennerkopf wird anhand der nachfolgend weiterbeschriebenen Figur 1 näher erläutert.

Diese Figur 1 zeigt einen Brennerkopf 6 der erfindungsgemäßen Art, welcher hier bezogen auf die Darstellung linksseitig eine Brennereinheit 3 aufweist, die zur Durchführung eines MSG-Schweißverfahrens vorgesehen ist. Dementsprechend weist das untere Ende dieser Brennereinheit 3 eine Stromkontaktdüse 3a auf, durch deren Bohrung eine abschmelzende Drahtelektrode 1 unter Ausbildung eines Stromkontaktes zu dieser Düse 3a hindurchführbar ist.

Unter einem Winkel α zur Führungsrichtung der Drahtelektrode 1 ist eine Brennereinheit 7 angeordnet, welche eine nicht abschmelzende Elektrode, zum Beispiel eine Wolfram-Elektrode 2 aufweist. Diese hier stabförmige Elektrode 2 ist mittels eines Antriebes 8 innerhalb der Brennereinheit verschieblich, insbesondere verschieblich zwischen zwei Stopp-Positionen, die die jeweiligen Endlagen des Verschiebeweges definieren. Die Verschieberichtung liegt hier entlang der Mittenlinie der nicht abschmelzenden Elektrode 2 und somit unter demselben zuvor genannten Winkel α zur Führungsrichtung der Drahtelektrode 1. Dieser Winkel α ist bevorzugt ein spitzer Winkel kleiner 45°.

Die erfindungsgemäße Ausführung des Brennerkopfes sieht es hier vor, dass die Spitze 2a der nicht abschmelzenden Elektrode 2 in der unteren Stopp-Position bevorzugt exakt im Schnittpunkt 4 der beiden genannten Führungsrichtungen von Drahtelektrode und nicht abschmelzender Elektrode liegt.

Die hier gezeigte Ausführung sieht es vor, dass der Antrieb 8 durch ein mit Druckgas, insbesondere inertem Druckgas, betriebenes Zylinder-Kolbenaggregat ausgebildet ist, in welchem ein Kolbenelement 8a innerhalb des Zylinders 8c verschieblich ist. Die hier beschriebene Ausführung verdeutlicht, dass durch eine Druckbeaufschlagung durch das Gas, insbesondere das Inertgas wie Argon oder Helium, in dem Ringraum 8 die Kolbenfläche 8b kraftbeaufschlagt wird und entgegen einer rückstellenden Kraft durch die an einer gegenüberliegende Kolbenflächen angreifenden Feder 11 in Richtung zum Werkstück verschiebbar ist.

Wird die Druckbeaufschlagung des Ringraumes 8d abgeschaltet, zum Beispiel durch Umschaltung eines Ventils und Entlastung des Ringraumes gegenüber der Umgebung, so wird das Kolbenelement 8a, welches hier koaxial die nicht abschmelzende Elektrode hält, in die zurückgezogene Position verschoben.

Das Halten der nicht abschmelzenden Elektrode 2 im Kolbenelement 8a kann hier zum Beispiel durch eine Spannhülse erfolgen.

Die Figur 1 verdeutlicht hier weiter, dass in der dargestellten Position die untere Spitze der nicht abschmelzenden Elektrode 2 durch eine Mündungsöffnung 10 der Brennereinheit 7 hindurchgetaucht ist und hierbei eine Klappe 9 in eine geöffnete Position verlagert hat. Hier sieht es die Erfindung vor, dass die Klappe 9 eine Federbelastung aufweist, welche die Klappe in die Schließposition vorspannt, wobei gleichzeitig die Klappe 9 hier an der Elektrode 2 anliegt. Es wird demnach bewirkt, dass durch ein Zurückziehen der nicht abschmelzenden Elektrode 2 durch die Mündungsöffnung 10 zurück in die Brennereinheit die Klappe 9 automatisch verschlossen wird und somit die Elektrodenspitze 2a der nicht abschmelzenden Elektrode 2 außerhalb jeglichen Einflusses durch einen Lichtbogen beziehungsweise einen Schweißprozess der Brennereinheit 3 zu liegen kommt.

Die Erfindung kann grundsätzlich vorsehen, dass das Zylinder-Kolbenaggregat zum Verschieben des Kolbenelementes mit jeglichem gasförmigen Druckfluid, in alternativer Ausführung auch mit flüssigem Fluid betreibbar ist. Bei einem Betrieb mit gasförmigem Druckfluid ist weiterhin bevorzugt vorgesehen, als Arbeitsfluid das Inertgas zu verwenden, welches gleichzeitig auch zur Spülung des Druckkopfes durch die gemeinsame Schutzgasdüse 5 hindurch verwendet wird während der Durchführung des Vorwärmens vor Beginn eines MSG-Schweißverfahrens mit dem abschmelzenden Draht 1.

Wenn gleich es nicht visualisiert ist, kann es die Erfindung vorsehen, dass der Brennerkopf Gaszuführungen sowohl für ein Inertgas, wie Argon oder Helium aufweist als auch für ein Aktivgas wie zum Beispiel Kohlendioxid oder ein Gemisch aus Kohlendioxid und Argon, wobei mittels eines Umschaltventiles das Innere der Schutzgasdüse 5 alternativ mit dem Gas aus einer der beiden Gaszuführungen beaufschlagt werden kann.

Es besteht demnach die Möglichkeit, das lokale Vorwärmen am Anfang einer Schweißnaht unter Verwendung der nicht abschmelzenden Elektrode unter Spülen mit Inertgas durchzuführen, wobei sodann nach Erlöschen des Lichtbogens von dieser nicht abschmelzenden Elektrode eine Umschaltung der Gasversorgung der Schutzgasdüse 5 von Inertgas auf ein Aktivgas, wie Kohlendioxid oder einer Mischung aus Kohlendioxid und Argon aus der anderen Gaszufuhr erfolgt.

So kann das anschließende Schutzgas-Schweißverfahren zum Beispiel unter Aktivgas als MAG-Schweißverfahren durchgeführt werden. Unter Beibehaltung der Schutzgasspülung mit Inertgas hingegen kann es vorgesehen sein, das nachfolgende MSG-Schweißverfahren als MIG-Schweißung durchzuführen.

Ersichtlich ist es so, dass mit einem Brennerkopf gemäß der Figur 1 bevorzugt zeitlich nacheinander sowohl Schweißverfahren mit der einen Brennereinheit 3 als auch mit der anderen Brennereinheit 7 durchgeführt werden können, insbesondere zur Durchführung des erfindungsgemäßen Verfahrens, bei welchem ein Schweißen, insbesondere lokales Vorwärmen mittels der Brennereinheit 7 lediglich am Anfang einer Schweißnaht und zeitlich dem MSG-Schweißprozess vorgelagert erfolgt.

## Patentansprüche

1. Verfahren zum Metall-Schutzgas-Schweißen, bei welchem während des Schweißens zur Erzeugung einer Schweißnaht entlang einer Schweißbahn zwischen wenigstens einem zu schweißenden Werkstück und einer insbesondere kontinuierlich zu dem wenigstens einen Werkstück zugeführten abschmelzenden Drahtelektrode (1) ein Lichtbogen in einer Schutzgasumgebung brennt, **dadurch gekennzeichnet, dass**
a. am Ort des Anfangs der zu erzeugenden Schweißnaht zeitlich vor dem Zünden des Lichtbogens zwischen dem wenigstens einen Werkstück und der Drahtelektrode (1) eine nicht abschmelzende Elektrode (2) in ihrer die Längserstreckungsrichtung der Drahtelektrode schneidenden Längserstreckungsrichtung auf das wenigstens eine Werkstück zu bewegt wird,
b. zwischen dem wenigstens einen Werkstück und der nicht abschmelzenden Elektrode (2) in einer Schutzgasumgebung ein Lichtbogen gezündet wird, mit dem das wenigstens eine Werkstück lokal am Anfang der zu erzeugenden Schweißnaht vorgewärmt wird,
c. nach dem Vorwärmen die nicht abschmelzende Elektrode (2) von dem wenigstens einen Werkstück weggezogen wird und
d. nach dem Wegziehen der nicht abschmelzenden Elektrode (2) der Lichtbogen zwischen dem wenigstens einen Werkstück und der Drahtelektrode (1) gezündet wird.

2. Verfahren nach Anspruch 1, **dadurch gekennzeichnet, dass** ein Vorerwärmen gemäß wenigstens einem der nachfolgenden Schritte erfolgt:
a. Die Vorerwärmung erfolgt bis zu einer Temperatur unterhalb der Umwandlungstemperatur des Gefüges des wenigstens einen Werkstückes
b. Die Vorerwärmung erfolgt bis zu einer Temperatur unterhalb der Schmelztemperatur des wenigstens einen Werkstückes und oberhalb einer Temperatur ab welcher eine Umwandlung des Gefüges des wenigstens einen Werkstückes erfolgt
c. Die Vorerwärmung erfolgt bis über eine Temperatur hinaus, ab welcher das wenigstens eine Werkstück schmilzt.

3. Verfahren nach Anspruch 2, **dadurch gekennzeichnet, dass** das Zünden des Lichtbogens zwischen dem wenigstens einen Werkstück und der Drahtelektrode (1) gemäß einer der folgenden Alternativen erfolgt:
a. Innerhalb von n/100 Sekunden nach Erlöschen des Lichtbogens an der nicht abschmelzenden Elektrode mit n<100, bevorzugt n<10
b. Zu einer Zeit wenn das wenigstens eine Werkstück eine Temperatur unterhalb der Umwandlungstemperatur erreicht hat,
c. Zu einer Zeit, zu der noch eine Schmelze des wenigstens einen Werkstückes am Ort des Schweißnahtanfangs vorliegt.

4. Verfahren nach einem der vorherigen Ansprüche, **dadurch gekennzeichnet, dass** eine Fahrbewegung in Schweißrichtung einer die abschmelzende Drahtelektrode (1) zuführenden Brennereinheit (3) erst nach Erlöschung des Lichtbogens zwischen der nicht abschmelzende Elektrode (2) und dem wenigstens einen Werkstück und nach Starten des Lichtbogen zwischen der abschmelzenden Drahtelektrode (1) und dem wenigstens einen Werkstück beginnt.

5. Verfahren nach einem der vorherigen Ansprüche, **dadurch gekennzeichnet, dass** vor dem Zünden des Lichtbogens zwischen dem wenigstens einen Werkstück und der nicht abschmelzenden Elektrode (2) die Drahtelektrode (1) zurückgezogen und nach Erlöschen dieses Lichtbogens wieder an das wenigstens eine Werkstück herangeführt wird.

6. Verfahren nach einem der vorherigen Ansprüche, **dadurch gekennzeichnet, dass** die abschmelzende Drahtelektrode (1) und die nicht abschmelzende Elektrode (2) auf sich unter einem Winkel (α), insbesondere einem spitzen Winkel (α) schneidenden Wegen geführt werden, insbesondere wobei der Schnittpunkt (4) beider Führungswege
a. innerhalb der Materialstärke des wenigstens einen zu schweißenden Werkstückes oder
b. exakt in der Oberflächenebene oder
c. über der Oberflächenebene des wenigstens einen zu schweißenden Werkstückes liegt.

7. Verfahren nach einem der vorherigen Ansprüche, **dadurch gekennzeichnet, dass** die abschmelzende Drahtelektrode (1) und die nicht abschmelzende Elektrode (2) innerhalb einer gemeinsamen mit Schutzgas durchspülten Schutzgasdüse (5) bewegt werden.

8. Verfahren nach Anspruch 7, **dadurch gekennzeichnet, dass** während der Dauer des Lichtbogens zwischen der nicht abschmelzenden Elektrode (2) und dem wenigstens einen Werkstück ein Spülen des Schweißnahtanfangs durch die Schutzgasdüse (5) mit inertem Schutzgas, insbesondere Argon oder Helium erfolgt und während der Dauer des Lichtbogens zwischen der abschmelzenden Drahtelektrode und dem wenigstens einen Werkstück ein Spülen mit aktivem Schutzgas, insbesondere Kohlendioxid oder einer Mischung aus Kohlendioxid und Argon erfolgt, insbesondere wobei die Gaszufuhr in die gemeinsame Schutzgasdüse (5) nach dem Erlöschen des Lichtbogens zwischen der nicht abschmelzenden Elektrode (2) und dem wenigstens einen Werkstück umgeschaltet wird von inertem auf aktives Schutzgas.

9. Brennerkopf (6) zum Metall-Schutzgasschweißen umfassend eine erste Brennereinheit (3) zur Zuführung einer abschmelzenden Drahtelektrode (1) und eine zweite Brennereinheit (7) mit einer nicht abschmelzenden Elektrode (2), wobei beide Brennereinheiten (3,7) miteinander mechanisch verbunden sind, die Elektroden (1,2) in einer gemeinsamen, mit Schutzgas beaufschlagbaren Schutzgasdüse (5) angeordnet sind und sich die Längserstreckungsrichtungen der Elektroden (1,2) schneiden, insbesondere in einem spitzen Winkel (α) schneiden, **dadurch gekennzeichnet, dass** die Brennereinheit (7) der nicht abschmelzenden Elektrode einen Antrieb (8) umfasst, mit dem die nicht abschmelzende Elektrode (2) in ihrer Längserstreckungsrichtung verschiebbar ist.

10. Brennerkopf nach Anspruch 9, **dadurch gekennzeichnet, dass** die nicht abschmelzende Elektrode (2), insbesondere eine Wolfram-Elektrode (2) mit dem Antrieb (8) zwischen zwei Stopp-Positionen hin und herbewegbar ist, insbesondere wobei in einer der Stopp-Positionen die Spitze (2a) der nicht abschmelzenden Elektrode (2) im Schnittpunkt (4) der Längserstreckungsrichtungen beider Elektroden (1,2) angeordnet ist.

11. Brennerkopf nach einem der vorherigen Ansprüche 9 oder 10, **dadurch gekennzeichnet, dass** die Brennereinheit (7) der nicht abschmelzenden Elektrode (2) eine in der gemeinsamen Schutzgasdüse (5) angeordnete verschließbare, insbesondere mit einer verschwenkbaren Klappe (9) verschließbare Mündungsöffnung (10) aufweist, durch welche hindurch die Spitze (2a) der nicht abschmelzenden Elektrode (2) hindurchgeführt ist bei einer Bewegung zwischen den Stopp-Positionen, insbesondere wobei in einer der Stopp-Positionen die Mündungsöffnung (10) durch Beaufschlagung einer Stellkraft die Klappe (9) automatisch verschließbar ist.

12. Brennerkopf nach einem der vorherigen Ansprüche 9 bis 11, **dadurch gekennzeichnet, dass** der Antrieb (8) ausgebildet ist als
a. Ein mit einem insbesondere gasförmigen Fluid betriebenes Zylinder-Kolben-Aggregat und die nicht abschmelzende Elektrode (2), bevorzugt koaxial, in einem verschieblichen Kolbenelement (8a) angeordnet ist oder
b. Ein elektromagnetischer Hubantrieb, insbesondere wobei die nicht abschmelzende Elektrode in einem magnetischen oder magnetisierbaren Element angeordnet ist, dass in einem elektromagnetischen, insbesondere umschaltbaren Feld beweglich ist.

13. Brennerkopf nach Anspruch 12, **dadurch gekennzeichnet, dass** das Kolbenelement (8a)
a. an zwei einander gegenüberliegenden Kolbenflächen mit unter Druck stehendem Fluid umschaltbar beaufschlagbar ist oder
b. an einer Kolbenfläche (8b) entgegen einer rückstellenden Federkraft (11) mit unter Druck stehendem Fluid schaltbar beaufschlagbar ist.

14. Brennerkopf nach Anspruch 12 oder 13, **dadurch gekennzeichnet, dass** das Zylinder-Kolbenaggregat (8) zum Antrieb des Kolbenelementes (8a) ab- oder umschaltbar mit einer Inertgas-Quelle verbunden ist, mit welcher gleichzeitig die gemeinsame Schutzgasdüse (5) mit Inertgas versorgt oder zumindest versorgbar ist.

15. Brennerkopf nach einem der vorherigen Ansprüche 9 bis 14, **dadurch gekennzeichnet, dass** die Brennereinheit (3) der abschmelzenden Drahtelektrode (1) eine Messvorrichtung umfasst zur Bestimmung der Drahtspitzenposition, insbesondere nach einer Rückzugbewegung der Drahtelektrode (1).

16. Brennerkopf nach einem der vorherigen Ansprüche 9 bis 15, **dadurch gekennzeichnet, dass** er einen ersten Gasanschluss, insbesondere zur Zuführung eines inerten Gases und einen zweiten Gasanschluss, insbesondere zur Zuführung eines aktiven Gases umfasst, sowie eine ansteuerbare Ventilvorrichtung aufweist, mittels der alternativ der erste oder der zweite Gasanschluss an die Schutzgasdüse (5) anschaltbar ist.

## Claims

1. Method for gas-shielded metal-arc welding, in which during welding an electric arc for generating a weld seam along a welding track between at least one workpiece to be welded and a consumable wire electrode (1) that is in particular continuously fed to the at least one workpiece burns in a protective-gas environment, **characterized in that**
a) at the location of the beginning of the weld seam to be generated, prior to igniting the electric arc between the at least one work piece and the wire electrode (1), a non-consumable electrode (2) in the longitudinal direction of the extent thereof that intersects the longitudinal direction of extent of the wire electrode is moved toward the at least one workpiece;
b) an electric arc by way of which the at least one workpiece is pre-heated locally at the beginning of the weld seam to be generated is ignited in a protective-gas environment between the at least one workpiece and the non-consumable electrode (2);
c) the non-consumable electrode (2) after pre-heating is retracted from the at least one workpiece; and
d) the electric arc between the at least one workpiece and the wire electrode (1) is ignited after the retraction of the non-consumable electrode (2).

2. Method according to Claim 1, **characterized in that** a pre-heating is performed according to at least one of the following steps:
a) the pre-heating is performed up to the temperature below the transition temperature of the microstructure of the at least one workpiece;
b) the pre-heating is performed up to a temperature below the melting temperature of the at least one workpiece and above a temperature beyond which a transition of the microstructure of the at least one workpiece is performed;
c) the pre-heating is performed beyond a temperature at which the at least one workpiece melts.

3. Method according to Claim 2, **characterized in that** igniting of the electric arc between the at least one workpiece and the wire electrode (1) is performed according to one of the following alternatives:
a) within n/100 seconds upon the extinction of the electric arc on the non-consumable electrode, where n<100, preferably n<10;
b) at a point in time at which the at least one workpiece has reached a temperature below the transition temperature;
c) at a point in time at which there is still fused material of the at least one workpiece at the location of the beginning of the weld seam.

4. Method according to one of the preceding claims, **characterized in that** a travelling movement in the welding direction of aburner unit (3) that feeds the consumable wire electrode (1) commences only upon extinction of the electric arc between the non-consumable electrode (2) and the at least one workpiece, and upon the start-up of the electric arc between the consumable wire electrode (1) and the at least one workpiece.

5. Method according to one of the preceding claims, **characterized in that** the wire electrode (1) is retracted prior to the ignition of the electric arc between the at least one workpiece and the non-consumable electrode (2) and is again moved towards the at least one workpiece upon extinction of this electric arc.

6. Method according to one of the preceding claims, **characterized in that** the consumable wire electrode (1) and the non-consumable electrode (2) are guided on paths that intersect at an angle (α), in particular at an acute angle (α), in particular wherein the intersection point (4) of both guide paths lies
a) within the material thickness of the at least one workpiece to be welded; or
b) exactly in the surface plane; or
c) above the surface plane of the at least one workpiece to be welded.

7. Method according to one of the preceding claims, **characterized in that** the consumable wire electrode (1) and the non-consumable electrode (2) are moved within a common protective-gas nozzle (5) that is purged with protective gas.

8. Method according to Claim 7, **characterized in that** during the period of the electric arc between the non-consumable electrode (2) and the at least one workpiece, purging of the beginning of the weld seam by way of the protective-gas nozzle (5) is performed with an inert protective gas, in particular argon or helium, and during the period of the electric arc between the consumable wire electrode and the at least one workpiece, purging is performed with an active protective gas, in particular carbon dioxide or a mixture of carbon dioxide and argon, in particular wherein the gas supply into the common protective-gas nozzle (5) after the extinction of the electric arc between the non-consumable electrode (2) and the at least one workpiece is switched from an inert to an active protective gas.

9. Burner head (6) for gas-shielded metal-arc welding, comprising a first burner unit (3) for feeding a consumable wire electrode (1) and a second burner unit (7) having a non-consumable electrode (2), wherein both burner units (3, 7) are mechanically interconnected, the electrodes (1, 2) are disposed in a common protective-gas nozzle (5) that is impingeable with a protective gas, and the longitudinal directions of extent of the electrodes (1, 2) intersect, in particular intersect at an acute angle (α), **characterized in that** the burner unit (7) of the non-consumable electrode comprises a drive (8) by way of which the non-consumable electrode (2) is disposable in the longitudinal direction of extent thereof.

10. Burner head according to Claim 9, **characterized in that** the non-consumable electrode (2), in particular a tungsten electrode (2), by way of the drive (8) is movable in a reciprocal manner between two stop positions, in particular wherein the tip (2a) of the non-consumable electrode (2) in one stop position is disposed in the intersection point (4) of the longitudinal directions of extent of both electrodes (1, 2).

11. Burner head according to one of the preceding Claims 9 or 10, **characterized in that** the burner unit (7) of the non-consumable electrode (2) has a mouth opening (10) that is disposed in the common protective-gas nozzle (5) and is closable, in particular closable by way of the pivotable flap (9), the tip (2a) of the non-consumable electrode (2) in a movement between the stop positions being routed through said mouth opening (10), in particular wherein in one of the stop positions the mouth opening (10) is automatically closable by impinging the flap (9) with an actuation force.

12. Burner head according to one of the preceding Claims 9 to 11, **characterized in that** the drive (8) is configured as
a) a cylinder/piston apparatus that is operated by way of an in particular gaseous fluid, the non-consumable electrode (2) being disposed preferably in a coaxial manner in a displaceable piston element (8a); or
b) an electromagnetic lifting drive, in particular wherein the non-consumable electrode is disposed in a magnetic or magnetisable element which is movable in an electromagnetic and in particular switchable field.

13. Burner head according to Claim 12, **characterized in that** the piston element (8a)
a) is impingeable in a switchable manner by a pressurised fluid at two mutually opposite piston faces; or
b) is impingeable in a switchable manner by a pressurised fluid at one piston face (8b) so as to oppose a restoring spring force (11).

14. Burner head according to either of Claims 12 and 13, **characterized in that** the cylinder/piston apparatus (8) for driving the piston element (8a) is connected so as to be able to be switched off or switched over to an inert-gas source by way of which the common protective-gas nozzle (5) is simultaneously supplied or at least capable of being supplied with an inert gas.

15. Burner head according to one of the preceding Claims 9 to 14, **characterized in that** the burner unit (3) of the consumable wire electrode (1) comprises a measuring device for determining the position of the wire tip, in particular after a retraction movement of the wire electrode (1).

16. Burner head according to one of the preceding Claims 5 to 15, **characterized in that** said burner head has a first gas connection, in particular for feeding an inert gas, and a second gas connection, in particular for feeding an active gas, and has an actuatable valve device by means of which the first or the second gas connection is switchable in an alternative manner to the protective-gas nozzle (5).

## Revendications

1. Procédé de soudage sous protection gazeuse avec apport de métal, dans lequel, pendant le soudage, un arc électrique est généré dans un environnement de protection gazeuse pour réaliser une soudure le long d'une trajectoire de soudage entre au moins une pièce à souder et un fil-électrode (1) fusible amené notamment en continu jusqu'à ladite au moins une pièce, **caractérisé en ce que**
a. à l'emplacement où démarre la soudure à réaliser, avant de générer l'arc électrique entre ladite au moins une pièce et le fil-électrode (1), une électrode (2) non fusible est déplacée sur ladite au moins une pièce dans sa direction d'extension longitudinale en formant une intersection avec la direction d'extension longitudinale du fil-électrode,
b. entre ladite au moins une pièce et l'électrode (2) non fusible, dans un environnement de protection gazeuse, un arc électrique est généré, avec lequel ladite au moins une pièce est préchauffée localement au début de la soudure à réaliser,
c. après le préchauffage, l'électrode (2) non fusible est retirée de ladite au moins une pièce, et
d. après le retrait de l'électrode (2) non fusible, l'arc électrique est généré entre ladite au moins une pièce et le fil-électrode (1).

2. Procédé selon la revendication 1, **caractérisé en ce qu'**un préchauffage est effectué conformément à au moins l'une des étapes suivantes :
a. le préchauffage est effectué jusqu'à une température inférieure à la température de conversion de la structure de ladite au moins une pièce,
b. le préchauffage est effectué jusqu'à une température inférieure à la température de fusion de ladite au moins une pièce et supérieure à une température à partir de laquelle il se produit une conversion de la structure de ladite au moins une pièce,
c. le préchauffage est effectué jusqu'à une température supérieure à une température à partir de laquelle ladite au moins une pièce fond.

3. Procédé selon la revendication 2, **caractérisé en ce que** la génération de l'arc électrique entre ladite au moins une pièce et le fil-électrode (1) est effectuée conformément à l'une des variantes suivantes :
a. au cours d'une période de n/100 secondes après l'extinction de l'arc électrique au niveau de l'électrode non fusible, avec n < 100, de préférence n < 10,
b. à un instant où ladite au moins une pièce a atteint une température inférieure à la température de conversion,
c. à un instant où une fusion de ladite au moins une pièce est encore présente à l'emplacement du début de la soudure.

4. Procédé selon l'une des revendications précédentes, **caractérisé en ce qu'**un mouvement de translation commence dans la direction de soudage d'une unité à brûleur (3) acheminant le fil-électrode (1) fusible immédiatement après l'extinction de l'arc électrique entre l'électrode (2) non fusible et ladite au moins une pièce et après le début de l'arc électrique entre le fil-électrode (1) fusible et ladite au moins une pièce.

5. Procédé selon l'une des revendications précédentes, **caractérisé en ce que**, avant la génération de l'arc électrique entre ladite au moins une pièce et l'électrode (2) non fusible, le fil-électrode (1) est retiré et est ramené vers ladite au moins une pièce après l'extinction dudit arc électrique.

6. Procédé selon l'une des revendications précédentes, **caractérisé en ce que** le fil-électrode (1) fusible et l'électrode (2) non fusible sont acheminés sur des trajets formant une intersection sous un angle (α), notamment un angle aigu (α), et en particulier, dans lequel le point d'intersection (4) des deux trajets de guidage se situe
a. à l'intérieur de l'épaisseur du matériau de ladite au moins une pièce à souder, ou
b. exactement dans le plan superficiel, ou
c. au-dessus du plan superficiel de ladite au moins une pièce à souder.

7. Procédé selon l'une des revendications précédentes, **caractérisé en ce que** le fil-électrode (1) fusible et l'électrode (2) non fusible sont déplacés à l'intérieur d'une buse pour gaz de protection (5) commune purgée par du gaz de protection.

8. Procédé selon la revendication 7, **caractérisé en ce que**, pendant la durée de l'arc électrique entre l'électrode (2) non fusible et ladite au moins une pièce, une purge du début de soudure est effectuée par l'intermédiaire de la buse pour gaz de protection (5) avec un gaz de protection inerte, en particulier de l'argon ou de l'hélium et **en ce que**, pendant la durée de l'arc électrique entre le fil-électrode fusible et ladite au moins une pièce, une purge est effectuée avec un gaz de protection actif, notamment du dioxyde de carbone ou un mélange de dioxyde de carbone et d'argon, et en particulier, dans lequel, l'apport de gaz dans la buse pour gaz de protection (5) commune, après l'extinction de l'arc électrique entre l'électrode (2) non fusible et ladite au moins une pièce, est amené à basculer d'un gaz de protection inerte à un gaz de protection actif.

9. Tête de brûleur (6) destinée à un soudage sous protection gazeuse avec apport de métal, comprenant une première unité à brûleur (3) destinée à acheminer un fil-électrode (1) fusible et une deuxième unité à brûleur (7) comportant une électrode (2) non fusible, dans lequel les deux unités à brûleur (3, 7) sont reliées mécaniquement l'une à l'autre, les électrodes (1, 2) sont disposées dans une buse pour gaz de protection (5) commune pouvant être exposée à du gaz de protection et les directions d'extension longitudinales des électrodes (1, 2) forment une intersection, en formant notamment une intersection sous un angle aigu (α), **caractérisé en ce que** l'unité à brûleur (7) de l'électrode non fusible comprend un mécanisme d'entraînement (8) au moyen duquel l'électrode (2) non fusible peut être déplacée dans sa direction d'extension longitudinale.

10. Tête de brûleur selon la revendication 9, **caractérisée en ce que** l'électrode (2) non fusible, en particulier une électrode Wolfram (2), peut être animée d'un mouvement de va-et-vient au moyen du mécanisme d'entraînement (8) entre deux positions d'arrêt, en particulier, dans lequel, à l'une des positions d'arrêt, la pointe (2a) de l'électrode (2) non fusible est disposée au point d'intersection (4) entre les directions d'extension longitudinales des deux électrodes (1, 2).

11. Tête de brûleur selon l'une des revendications 9 ou 10 précédentes, **caractérisée en ce que** l'unité à brûleur (7) de l'électrode (2) non fusible comporte un orifice (10) pouvant être fermé, en particulier par un clapet pivotant (9), disposé dans la buse pour gaz de protection (5) commune, orifice à travers lequel la pointe (2a) de l'électrode (2) non fusible est insérée lors d'un mouvement entre les positions d'arrêt, en particulier dans lequel, à l'une des positions d'arrêt, l'orifice (10) peut être automatiquement refermé par application d'une force d'actionnement au clapet (9).

12. Tête de brûleur selon l'une des revendications 9 à 11 précédentes, **caractérisée en ce que** le mécanisme d'entraînement (8) est réalisé sous la forme
a. d'un module à cylindre-piston actionné par un fluide notamment sous forme de gaz, l'électrode (2) non fusible étant disposée dans un élément de piston (8a) mobile, de préférence coaxial, ou
b. d'un mécanisme de levage électromagnétique, en particulier, dans lequel l'électrode non fusible est disposée dans un élément magnétique ou magnétisable de manière à ce qu'elle soit mobile dans un champ électromagnétique, notamment commutable.

13. Tête de brûleur selon la revendication 12, **caractérisée en ce que** l'élément de piston (8a) peut être sollicité
a. de manière permutable par un fluide sous pression sur au moins deux surfaces de piston mutuellement opposées, ou
b. de manière commutable par un fluide sous pression, au niveau d'une surface de piston (8b), en opposition à une force de rappel (11).

14. Tête de brûleur selon la revendication 12 ou 13, **caractérisée en ce que** le module à cylindre-piston (8) est relié de manière interruptible ou commutable, pour entraîner l'élément de piston (8a), à une source de gaz inerte au moyen de laquelle la buse pour gaz inerte (5) commune est ou peut être simultanément alimentée en gaz inerte.

15. Tête de brûleur selon l'une des revendications 9 à 14 précédentes, **caractérisée en ce que** l'unité à brûleur (3) du fil-électrode (1) fusible comprend un dispositif de mesure destiné à déterminer la position de la pointe du fil, en particulier après que le fil-électrode (1) a été retiré.

16. Tête de brûleur selon l'une des revendications 9 à 15 précédentes, **caractérisée en ce qu'**elle comprend un premier raccord de gaz, notamment destiné à acheminer un gaz inerte, et un deuxième raccord de gaz, notamment destiné à acheminer un gaz actif, et comporte également un dispositif à soupape pouvant être commandé, au moyen duquel le premier ou le deuxième raccord de gaz peut être alternativement raccordé à la buse pour gaz de protection (5).
